# EUROPÄISCHE PATENTSCHRIFT

(11) **EP 3 772 860 B1**
(45) Veröffentlichungstag und Bekanntmachung des Hinweises auf die Patenterteilung: **10.04.2024**
(21) Anmeldenummer: 20189351.8
(22) Anmeldetag: 04.08.2020
(51) Int. Cl.: H04R 1/28, H04R 1/34, H04R 17/00, H04R 1/26

(54) **MOBILTELEFON MIT EINEM EINE RÜCKSEITIGE SEKUNDÄRÖFFNUNG AUFWEISENDEN AUDIOSYSTEM**
MOBILE PHONE WITH AN AUDIO SYSTEM HAVING A REAR SECONDARY OPENING
TÉLÉPHONE MOBILE DOTÉ D'UN SYSTÈME AUDIO À OUVERTURE ARRIÈRE SECONDAIRE

(30) Priorität: 06.08.2019 DE 102019121258
(43) Veröffentlichungstag der Anmeldung: 10.02.2021
(73) Patentinhaber: Usound GmbH, 8020 Graz (AT)
(72) Erfinder: RUSCONI CLERICI BELTRAMI, Andrea, 1130 Wien (AT); BOTTONI, Ferruccio, 8020 Graz (AT)
(74) Vertreter: Canzler & Bergmeier Patentanwälte Partnerschaft mbB

(56) Entgegenhaltungen:
- EP-A2- 1 072 167
- EP-B1- 1 072 167
- DE-A1-102014 105 754
- DE-A1-102016 103 477
- US-A1- 2005 221 867
- US-A1- 2014 328 491
- US-A1- 2016 157 021
- US-A1- 2016 191 097
- US-A1- 2017 188 139

## Beschreibung

Die vorliegende Erfindung betrifft ein Mobiltelefon mit einem Gehäuse, einem auf einer Vorderseite des Gehäuses angeordneten Berührungsbildschirm und einem in das Gehäuse integrierten Audiosystem, das einen ersten Hohlraum mit einer benachbart zum Berührungsbildschirm angeordneten Primäröffnung, einen zweiten Hohlraum und einen zwischen den beiden Hohlräumen angeordneten und diese voneinander trennenden ersten Lautsprecher aufweist, mit dem bei bestimmungsgemäßem Gebrauch des Mobiltelefons über die Primäröffnung erste Schallwellen zu einem Ohr eines Benutzers aussendbar sind.

Bei aus dem Stand der Technik bekannten Mobiltelefonen befindet sich die Primäröffnung des integrierten Audiosystems auf der Vorderseite eines Gehäuses. Beim Telefonieren liegt das Ohr des Benutzers somit im Wesentlichen über der Primäröffnung, so dass diese durch die Ohrmuschel des Benutzers vergleichbar zu einem Kopfhörer akustisch abgedichtet wird. Dies wird als "Kopfhörer-Effekt" bezeichnet. Hierdurch kann sichergestellt werden, dass die über die Primäröffnung ausgesendeten Schallwellen größtenteils in das Ohr gelangen und nur ein vernachlässigbar geringer Anteil in die Umgebung ausgestrahlt wird. Nachteilig hierbei ist jedoch, dass ein Teilbereich der Vorderseite des Gehäuses durch die Primäröffnung verloren geht und nicht die gesamte Vorderseite des Gehäuses als Berührungsbildschirm genutzt werden kann.

Aus der US 2014/0328491 A1 ist ein Mobiltelefon bekannt. Dieses umfasst ein Tonwiedergabesystem mit mindestens einer Hörmuschel und mindestens einem Freisprechlautsprecher.

Aus der US 2005/0221867 A1 ist ein Lautsprechersystem für ein Mobiltelefon bekannt. Das Lautsprechersystem umfasst mindestens einen Dipol-Lautsprecher.

Aus der EP 1 072 167 A2 ist ein Gerät mit einem Gehäuse, einem im Gehäuseinnenraum untergebrachten elektroakustischen Wandler und mit mindestens einem eine Gehäusewand durchsetzenden Kanal bekannt.

Aufgabe der vorliegenden Erfindung ist es somit, ein Mobiltelefon mit einem Audiosystem zu schaffen, mit dem die Fläche des Berührungsbildschirms maximiert werden kann und vermieden wird, dass die an den Benutzer übersandten Audioinformationen von in der Umgebung befindlichen Personen wahrnehmbar sind.

Die Aufgabe wird gelöst durch ein Mobiltelefon und ein Audiosystem mit den Merkmalen der unabhängigen Patentansprüche.

Vorgeschlagen wird ein Mobiltelefon, insbesondere ein Smartphone, mit einem Gehäuse, einem auf der Vorderseite des Gehäuses angeordneten Berührungsbildschirm und einem in das Gehäuse integrierten Audiosystem. Das Audiosystem umfasst einen ersten Hohlraum mit einer Primäröffnung. Die Primäröffnung ist vorzugsweise benachbart zum Berührungsbildschirm angeordnet. Des Weiteren umfasst das Audiosystem einen zweiten Hohlraum und einen zwischen den beiden Hohlräumen angeordneten ersten Lautsprecher. Der erste Lautsprecher trennt somit die beiden Hohlräume voneinander. Mit dem ersten Lautsprecher sind bei bestimmungsgemäßem Gebrauch des Mobiltelefons über die Primäröffnung erste Schallwellen zu einem Ohr eines Benutzers aussendbar. Der zweite Hohlraum weist eine Sekundäröffnung auf. Über diese Sekundäröffnung können ebenfalls Schallwellen ausgesendet werden. Die Sekundäröffnung ist auf einer der Vorderseite gegenüberliegenden Rückseite des Gehäuses angeordnet. Die Primäröffnung und die Sekundäröffnung sind somit in zueinander unterschiedliche Richtungen orientiert. Bei bestimmungsgemäßem Gebrauch des Mobiltelefons sind mit dem ersten Lautsprecher über die Sekundäröffnung zweite Schallwellen vom Ohr weg in die Umgebung aussendbar. Diese sind zu den ersten Schallwellen derart phasenversetzt, dass die Lautstärke der von dem Audiosystem in die Umgebung abgegebenen Schallwellen reduzierbar sind. Vorteilhafterweise muss die Primäröffnung somit nicht mehr auf der Vorderseite des Gehäuses angeordnet werden. Stattdessen kann die Primäröffnung nunmehr auch an einem Ort des Gehäuses angeordnet werden, an dem diese beim Telefonieren nicht mehr von der Ohrmuschel des Benutzers vollständig abgedeckt wird. Vorteilhafterweise kann somit die Fläche des Berührungsbildschirms maximiert werden. Des Weiteren wird die Privatsphäre des Benutzers gewahrt, da Telefonate von in der Umgebung befindlichen Dritten nicht mitgehört werden können.

Vorteilhaft ist es, wenn die Vorderseite und/oder der Berührungsbildschirm, insbesondere ausschließlich und/oder vollflächig, plan ausgebildet sind. Des Weiteren ist es vorteilhaft, wenn sich der Berührungsbildschirm zumindest über die gesamte Vorderseite, insbesondere lückenlos und/oder vollständig, erstreckt. Hierdurch kann der Benutzer die gesamte Vorderseite des Gehäuses als Berührungsbildschirm nutzen.

Das Gehäuse weist eine Rahmenseite, insbesondere eine Rahmenfläche, auf, die die Vorderseite mit der Rückseite verbindet. Die Rahmenseite kann, insbesondere konvex, gekrümmt oder plan sein. Zwischen der Rahmenseite und der benachbarten Vorderseite und/oder Rückseite kann eine Kante ausgebildet sein.

Die Primäröffnung ist in der Rahmenseite angeordnet. Hierdurch kann die gesamte Vorderseite des Gehäuses als Berührungsbildschirm genutzt werden.

Um sicherzustellen, dass möglichst viele der ersten Schallwellen über die Primäröffnung in Richtung des Ohrs des Benutzers ausgesendet werden, ist es vorteilhaft, wenn die Primäröffnung, insbesondere unmittelbar, am Bildschirmrand des Berührungsbildschirms angeordnet und/oder in Richtung des Ohrs orientiert ist.

Vorteilhaft ist es, wenn die Primäröffnung in einer Seitenansicht des Mobiltelefons in Richtung einer Längsachse des Gehäuses auf einer ersten Höhe und die Sekundäröffnung auf einer zur ersten Höhe niedrigeren zweiten Höhe angeordnet ist. Hierdurch kann der Weg, den der Schall von einer Membran des Lautsprechers bis zur Sekundäröffnung zurücklegen muss, im Vergleich zum Weg, den der Schall von der Membran bis zur Primäröffnung zurücklegen muss, vergrößert werden.

In einer vorteilhaften Weiterbildung der Erfindung ist die Sekundäröffnung von der Primäröffnung in Richtung der Längsachse des Gehäuses beabstandet. Die Primäröffnung und die Sekundäröffnung sind somit nicht auf gleicher Höhe, sondern auf unterschiedlichen Höhen zueinander angeordnet.

Vorteilhafterweise ist die Primäröffnung in Richtung der Längsachse des Gehäuses über dem Berührungsbildschirm angeordnet. Die Sekundäröffnung ist in Richtung der Längsachse des Gehäuses vorzugsweise unterhalb der Primäröffnung angeordnet. Die Sekundäröffnung ist somit in Querrichtung des Gehäuses dem Berührungsbildschirm gegenüberliegend angeordnet.

Vorteilhaft ist es, wenn der erste Lautsprecher ein Tieftonlautsprecher ist.

Auch ist es vorteilhaft, wenn der erste Lautsprecher derart im Gehäuse angeordnet ist, dass eine erste Hubachse des ersten Lautsprechers, entlang der eine erste Membran des ersten Lautsprechers auslenkbar ist, gegenüber der Längsachse des Gehäuses, insbesondere um 90°, geneigt ist. Die erste Membran des ersten Lautsprechers erstreckt sich somit im Wesentlichen entlang der Längsachse des Gehäuses.

Vorteilhaft ist es, wenn in Richtung der Längsachse des Gehäuses eine erste Länge zwischen erster Hubachse und Primäröffnung kleiner ist als eine zweite Länge zwischen erster Hubachse und Sekundäröffnung. Infolgedessen ist der Weg, den der Schall von der Membran bis zur Primäröffnung zurücklegen muss kleiner als der Weg den der Schall von der Membran bis zur Sekundäröffnung zurücklegen muss.

In einer vorteilhaften Weiterbildung der Erfindung weist das Audiosystem einen, insbesondere zum ersten Lautsprecher kleineren, zweiten Lautsprecher auf. Der zweite Lautsprecher ist vorzugsweise ein Hochtonlautsprecher. Ferner ist dieser vorzugsweise derart im Gehäuse angeordnet, dass eine zweite Hubachse des zweiten Lautsprechers entlang der eine zweite Membran des zweiten Lautsprechers auslenkbar ist, parallel zur Längsachse des Gehäuses verläuft.

Vorteilhaft ist es, wenn die erste Hubachse und die zweite Hubachse der beiden Lautsprecher zueinander, insbesondere um 90°, geneigt sind.

In einer vorteilhaften Weiterbildung der Erfindung weisen der erste und zweite Lautsprecher voneinander getrennte erste Hohlräume und/oder Primäröffnungen auf.

Vorteilhaft ist es, wenn die beiden Primäröffnungen der beiden Lautsprecher an einer Außenseite des Gehäuses in Bezug auf die Längsachse des Gehäuses nebeneinander oder übereinander angeordnet sind.

Um die Fläche der Primäröffnungen an der Außenseite des Gehäuses zu reduzieren, ist es vorteilhaft, wenn die beiden ersten Hohlräume in einem Endbereich zusammengeführt sind, so dass die beiden Lautsprecher eine gemeinsame Primäröffnung aufweisen.

Vorteilhaft ist es, wenn der erste und zweite Lautsprecher einen gemeinsamen zweiten Hohlraum und/oder eine gemeinsame Sekundäröffnung aufweisen. Der zweite Hohlraum bildet somit sowohl eine Kavität des ersten als auch des zweiten Lautsprechers.

Das Audiosystem kann sehr kompakt ausgebildet werden, wenn der erste und/oder zweite Lautsprecher ein, insbesondere piezoelektrischer, MEMS-Lautsprecher ist. Vorzugsweise umfasst der MEMS-Lautsprecher ein Trägersubstrat, insbesondere aus Silizium sowie einen piezoelektrischen Aktor zum Auslenken der Membran.

Vorteilhaft ist es, wenn der zweite Hohlraum durch einen Substrathohlraum des Trägersubstrats und einen Gehäusehohlraum des Gehäuses ausgebildet ist. Hierdurch kann die Kavität des MEMS-Lautsprechers maximiert werden.

Vorteilhaft ist es, wenn das Audiosystem eine mit dem Lautsprecher elektrisch verbundene Steuereinheit, insbesondere zum akustischen Strahlformen, umfasst.

Vorgeschlagen wird ferner die Verwendung eines Audiosystems in einem Mobiltelefon, das einen ersten Hohlraum mit einer Primäröffnung, einen zweiten Hohlraum und einen zwischen den beiden Hohlräumen angeordneten und diese voneinander trennenden ersten Lautsprecher aufweist, mit dem bei bestimmungsgemäßem Gebrauch des Telefons über die Primäröffnung erste Schallwellen zu einem Ohr des Benutzers ausgesendet werden können. Das Audiosystem ist zur Verwendung in einem Mobiltelefon mit mindestens den Merkmalen gemäß Anpsruch 14 ausgebildet.

Weitere Vorteile der Erfindung sind in den nachfolgenden Ausführungsbeispielen beschrieben. Es zeigt:
- **Figur 1**: ein Mobiltelefon in einer Vorderansicht mit einer Primäröffnung und einer Sekundäröffnung und
- **Figur 2**: einen Querschnitt des Mobiltelefons im Bereich eines Audiosystems.

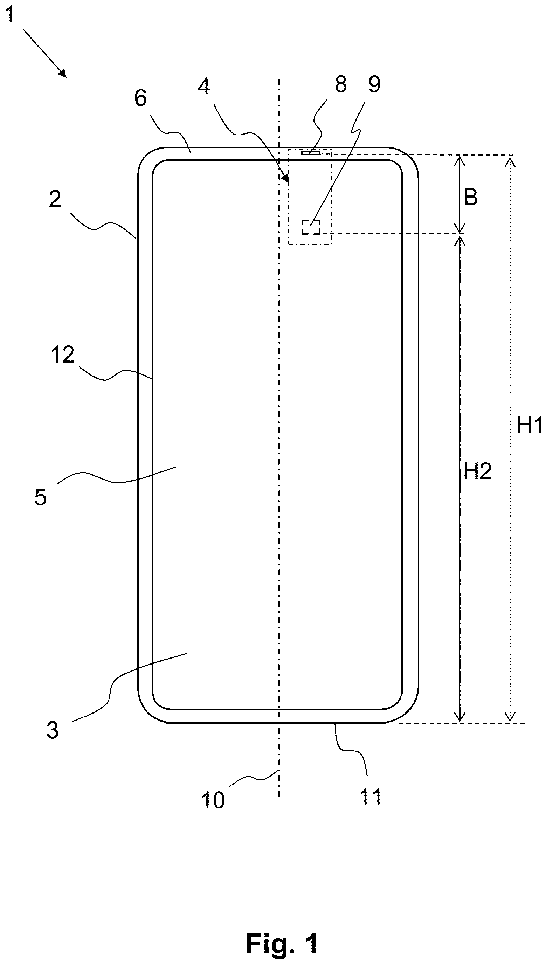

Figur 1 zeigt ein Mobiltelefon 1 in einer Vorderansicht. Das Mobiltelefon 1 umfasst ein Gehäuse 2, einen Berührungsbildschirm 3 und ein Audiosystem 4. Das Audiosystem 4 ist vollständig in das Gehäuse 2 integriert. Der Berührungsbildschirm 3 ist auf einer Vorderseite 5 des Gehäuses 2 angeordnet. Sowohl die Vorderseite 5 als auch der Berührungsbildschirm 3 sind plan ausgebildet. Der Berührungsbildschirm 3 erstreckt sich, insbesondere lückenlos und/oder vollständig, über die gesamte Vorderseite 5.

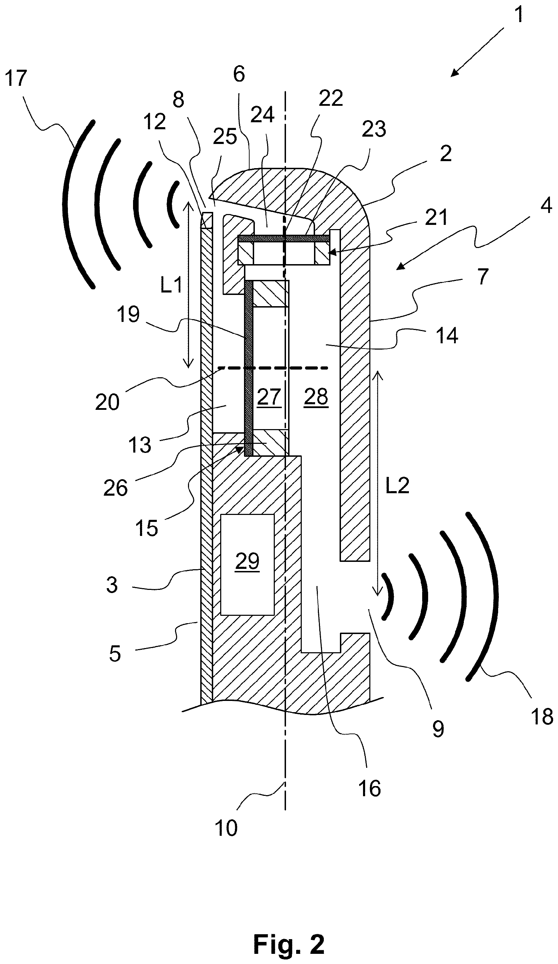

Wie aus den Figuren hervorgeht, weist das Gehäuse 2 eine Rahmenseite 6 auf, die die Vorderseite 5 mit einer in Figur 2 dargestellten Rückseite 7 des Gehäuses 2 verbindet. Die Rahmenseite ist in dem vorliegenden Ausführungsbeispiel konvex gekrümmt. Sie erstreckt sich somit in einer Seitenansicht von der planen Vorderseite 5 in einem Bogen bis zur Rückseite 7, die insbesondere ebenfalls plan ausgebildet ist.

Das Audiosystem 4, dass im Folgenden noch detailliert beschrieben wird, umfasst eine Primäröffnung 8 und eine Sekundäröffnung 9. Die Primäröffnung 8 ist benachbart zum Berührungsbildschirm 3 angeordnet. Die Sekundäröffnung 9 ist auf der Rückseite 7 des Gehäuses 2 angeordnet. Die Primäröffnung 8 und die Sekundäröffnung 9 sind somit zueinander in unterschiedliche Richtungen orientiert. Gemäß Figur 1 sind die Primäröffnung 8 und die Sekundäröffnung 9 relativ zueinander in unterschiedlichen Höhen angeordnet. Demnach ist die Primäröffnung 8 in Richtung der Längsachse 10 des Gehäuses 2 relativ zu einem unteren Ende 11 des Gehäuses 2 in einer ersten Höhe H1 angeordnet. Die Sekundäröffnung 9 ist in Richtung der Längsachse 10 des Gehäuses 2 relativ zu dem unteren Ende 11 des Gehäuses 2 in einer zweiten Höhe H2 angeordnet. Die zweite Höhe H2 ist im Vergleich zur ersten Höhe H1 niedriger. Infolgedessen ist die Sekundäröffnung 9 unterhalb der Primäröffnung 8 angeordnet. Relativ zur Längsachse 10 des Gehäuses 2 weisen die Primäröffnung 8 und die Sekundäröffnung 9 relativ zueinander einen Abstand B auf.

Wie aus Figur 1 und 2 hervorgeht, ist die Primäröffnung 8 benachbart zu einem Bildschirmrand 12 des Berührungsbildschirms 3 angeordnet. Des Weiteren befindet sich die Primäröffnung 8 an der Rahmenseite 6 des Gehäuses 2. Vorteilhafterweise kann hierdurch die komplette Vorderseite 5 des Gehäuses 2 für den Berührungsbildschirm 3 genutzt werden. Ein damit einhergehender Nachteil besteht jedoch darin, dass die Primäröffnung 8 aufgrund der randseitigen Anordnung beim Telefonieren nicht mehr vollständig von einer vorliegend nicht dargestellten Ohrmuschel eines Benutzers abgedeckt wird. Aufgrund dessen gelangen bei einer derartigen Anordnung der Primäröffnung 8 deutlich mehr Schallwellen in die Umgebung, so dass Telefonate von in der Umgebung befindlichen Personen mitgehört werden können. Um dies zu vermeiden, weist das Audiosystem 4 auf der Rückseite 7 des Gehäuses 2 die zusätzliche Sekundäröffnung 9 auf, die derart konfiguriert ist, dass mittels eines Phasenversatzes zwischen den ausgesendeten Schallwellen die Lautstärke der von dem Audiosystem 4 in die Umgebung abgegebenen Schallwellen reduziert wird.

Die genaue Funktionsweise des Audiosystems 4 wird nachfolgend in Bezug auf Figur 2 detailliert erläutert. Figur 2 zeigt eine Querschnittsansicht des Mobiltelefons 1 im Bereich des Audiosystems 4. Das Audiosystem 4 umfasst einen ersten Hohlraum 13, einen zweiten Hohlraum 14 und einen zwischen den beiden Hohlräumen 13, 14 angeordneten ersten Lautsprecher 15. Der erste Lautsprecher 15 trennt demnach den ersten Hohlraum 13 von dem zweiten Hohlraum 14. Der zweite Hohlraum 14 bildet demnach das Rückvolumen bzw. eine Kavität 16 des ersten Lautsprechers 15. Die Primäröffnung 8 ist dem ersten Hohlraum 13 zugeordnet. Die Primäröffnung 8 ist, insbesondere unmittelbar, benachbart zum Berührungsbildschirm 3 angeordnet. Wie aus Figur 2 hervorgeht befindet sich die Primäröffnung 8 bereits in einem gekrümmten Abschnitt des Gehäuses 2, nämlich in der Rahmenseite 6.

Das Audiosystem 4 kann bei bestimmungsgemäßem Gebrauch des Mobiltelefons 1 über die Primäröffnung 8 vom ersten Lautsprecher 15 erzeugte erste Schallwellen 17 zu einem vorliegend nicht dargestellten Ohr eines Benutzers und/oder zumindest teilweise in Richtung der Vorderseite 5 des Gehäuses 2 aussenden. Gleichzeitig werden über die Sekundäröffnung 9 auf der Rückseite 7 des Gehäuses 2 vom ersten Lautsprecher 15 erzeugte zweite Schallwellen 18 ausgesendet. Die zweiten Schallwellen 18 sind zu den ersten Schallwellen 17, insbesondere um 180°, phasenversetzt. Die in die Umgebung ausgesendeten zweiten Schallwellen 18 eliminieren somit die ungewollt in die Umgebung ausgesendeten ersten Schallwellen 17. Hierdurch wird die Lautstärke der von dem Audiosystem 4 in die Umgebung abgestrahlten Schallwellen reduziert, so dass Telefonate von in der Umgebung befindlichen Dritten nicht mitgehört werden können.

Wie aus Figur 2 hervorgeht umfasst der erste Lautsprecher 15 eine erste Membran 19, die entlang einer ersten Hubachse 20 ausgelenkt werden kann. Der erste Lautsprecher 15 ist derart im Gehäuse 2 angeordnet, dass die erste Hubachse 20 gegenüber der Längsachse 10 des Gehäuses 2 geneigt ist. Gemäß dem vorliegenden Ausführungsbeispiel ist die erste Hubachse 20 um 90° gegenüber der Längsachse 10 geneigt. Infolgedessen erstreckt sich die erste Membran 19 parallel zur Längsachse 10. Der erste Hohlraum 13 ist im Vergleich zu dem zweiten Hohlraum 14 in Richtung der Längsachse 10 kürzer ausgebildet. Infolgedessen müssen die ersten Schallwellen 17 von der ersten Membran 19 ausgehend bis zur Primäröffnung 8 einen kürzeren Weg zurücklegen als die zweiten Schallwellen 18 von der ersten Membran 19 bis zur Sekundäröffnung 9. Die sich in Richtung der Längsachse 10 des Gehäuses 2 erstreckende erste Länge L1 zwischen der ersten Hubachse 20 und der Primäröffnung 8 ist somit kleiner als eine zweite Länge L2 zwischen der ersten Hubachse 20 und der Sekundäröffnung 9.

Wie aus Figur 2 hervorgeht, umfasst das Audiosystem 4 einen zweiten Lautsprecher 21. Der zweite Lautsprecher 21 ist im Vergleich zum ersten Lautsprecher 15 kleiner ausgebildet. Des Weiteren handelt es sich bei dem zweiten Lautsprecher 21 vorzugsweise um einen Hochtonlautsprecher. Der erste Lautsprecher 15 ist im Gegensatz dazu vorzugsweise ein Tieftonlautsprecher. Der erste und/oder zweite Lautsprecher 15, 21 kann als MEMS-Lautsprecher ausgebildet sein.

Der zweite Lautsprecher 21 ist derart im Gehäuse angeordnet, dass eine zweite Hubachse 22 des zweiten Lautsprechers 21, entlang der eine zweite Membran 23 auslenkbar ist, parallel zur Längsachse des Gehäuses 2 verläuft. Infolgedessen sind der erste und zweite Lautsprecher 15, 21 zueinander um 90° gedreht im Gehäuse 2 angeordnet.

Der zweite Lautsprecher 21 weist einen zum vorstehend beschriebenen ersten Hohlraum 13 wirkungsgleichen Hohlraum auf, der nachstehend als dritter Hohlraum 24 bezeichnet wird. Dieser dritte Hohlraum 24 ist vom ersten Hohlraum 13 getrennt. In einem gemeinsamen Endbereich 25 ist der erste Hohlraum 13 und der dritte Hohlraum 24 zusammengeführt, so dass diese eine gemeinsame Primäröffnung 8 aufweisen. In einem vorliegend nicht dargestellten Ausführungsbeispiel könnte der dritte Hohlraum 24 eine zusätzliche separate Primäröffnung aufweisen. In diesem Fall könnten die beiden Primäröffnungen 8 nebeneinander oder übereinander an der Außenseite des Gehäuses 2 angeordnet sein.

Wie aus Figur 2 hervorgeht teilen sich die beiden Lautsprecher 15, 21 den zweiten Hohlraum 14 sowie die Sekundäröffnung 9. In einem vorliegend nicht dargestellten Ausführungsbeispiel kann der zweite Lautsprecher 21 auch einen vom zweiten Hohlraum 14 getrennten Hohlraum aufweisen, der die Kavität des zweiten Lautsprechers 21 bildet.

Gemäß dem vorliegenden Ausführungsbeispiel sind die beiden Lautsprecher 15, 21 als MEMS-Lautsprecher ausgebildet, wobei zur Wahrung der Übersichtlichkeit nur einer dieser beiden in Figur 2 mit Bezugszeichen versehen ist. Ein derartiger MEMS-Lautsprecher umfasst ein Trägersubstrat 26, das vorzugsweise aus Silizium hergestellt ist. An diesem Trägersubstrat 26 ist ein vorliegend nicht dargestellter, insbesondere piezoelektrischer, Aktor zum Auslenken der Membran 19 angeordnet. Das Trägersubstrat 26 weist einen Substrathohlraum 27 auf, der zusammen mit einem Gehäusehohlraum 28 den zweiten Hohlraum 14 bzw. die Kavität 16 des ersten Lautsprechers 15 ausbildet.

Gemäß Figur 2 umfasst das Audiosystem 4 eine Steuereinheit 29. Diese ist elektrisch mit dem ersten und oder zweiten Lautsprecher 15, 21 verbunden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Mobiltelefon
- 2: Gehäuse
- 3: Berührungsbildschirm
- 4: Audiosystem
- 5: Vorderseite
- 6: Rahmenseite
- 7: Rückseite
- 8: Primäröffnung
- 9: Sekundäröffnung
- 10: Längsachse
- 11: unteres Ende
- 12: Bildschirmrand
- 13: erster Hohlraum
- 14: zweiter Hohlraum
- 15: erster Lautsprecher
- 16: Kavität
- 17: erste Schallwellen
- 18: zweite Schallwellen
- 19: erste Membran
- 20: erste Hubachse
- 21: zweiter Lautsprecher
- 22: zweite Hubachse
- 23: zweite Membran
- 24: dritter Hohlraum
- 25: Endbereich
- 26: Trägersubstrat
- 27: Substrathohlraum
- 28: Gehäusehohlraum
- 29: Steuereinheit

- H1: erste Höhe
- H2: zweite Höhe

- B: Abstand

- L1: erste Länge
- L2: zweite Länge

## Patentansprüche

1. Mobiltelefon (1) mit einem
Gehäuse (2), das eine Rahmenseite (6) aufweist, die eine Vorderseite (5) mit einer gegenüberliegenden Rückseite (7) des Gehäuses (2) verbindet,
einem auf der Vorderseite (5) des Gehäuses (2) angeordneten Berührungsbildschirm (3) und
einem in das Gehäuse (2) integrierten Audiosystem (4),
das einen ersten Hohlraum (13) mit einer benachbart zum Berührungsbildschirm (3) angeordneten Primäröffnung (8),
einen zweiten Hohlraum (14) mit einer Sekundäröffnung (9),
die auf der Rückseite (7) des Gehäuses (2) angeordnet ist, und einen zwischen den beiden Hohlräumen (13, 14) angeordneten und diese voneinander trennenden ersten Lautsprecher (15) aufweist,
mit dem bei bestimmungsgemäßem Gebrauch des Mobiltelefons (1) über die Primäröffnung (8) erste Schallwellen (17) zu einem Ohr eines Benutzers und über die Sekundäröffnung (9) zweite Schallwellen (18) vom Ohr weg in die Umgebung aussendbar sind, die zu den ersten Schallwellen (17) derart phasenversetzt sind, dass die Lautstärke der von dem Audiosystem (4) in die Umgebung abgegebenen Schallwellen reduzierbar ist,
**dadurch gekennzeichnet,**
**dass** die Primäröffnung (8) in der Rahmenseite (6) angeordnet ist und dass der erste Hohlraum (13) im Vergleich zu dem zweiten Hohlraum (14) in Richtung einer Längsachse (10) des Gehäuses (2) kürzer ausgebildet ist, so dass die ersten Schallwellen (17) von einer ersten Membran (19) des ersten Lautsprechers (15) ausgehend bis zur Primäröffnung (8) einen kürzeren Weg zurücklegen als die zweiten Schallwellen (18) von der ersten Membran (19) bis zur Sekundäröffnung (9).

2. Mobiltelefon nach dem vorherigen Anspruch, **dadurch gekennzeichnet, dass** die Vorderseite (5) und/oder der Berührungsbildschirm (3) plan ausgebildet sind und/oder
dass sich der Berührungsbildschirm (3) zumindest über die gesamte Vorderseite (5), insbesondere lückenlos und/oder vollständig, erstreckt.

3. Mobiltelefon nach einem oder mehreren der vorherigen Ansprüche, **dadurch gekennzeichnet, dass** die Rahmenseite (6) konvex gekrümmt ist.

4. Mobiltelefon nach einem oder mehreren der vorherigen Ansprüche, **dadurch gekennzeichnet, dass** die Primäröffnung (8) am Bildschirmrand (12) des Berührungsbildschirms angeordnet ist.

5. Mobiltelefon nach einem oder mehreren der vorherigen Ansprüche, **dadurch gekennzeichnet, dass** die Primäröffnung (8) in einer Seitenansicht des Mobiltelefons in Richtung der Längsachse (10) des Gehäuses (2) auf einer ersten Höhe (H1) und die Sekundäröffnung (9) auf einer zur ersten Höhe (H1) niedrigeren zweiten Höhe (H2) angeordnet ist.

6. Mobiltelefon nach einem oder mehreren der vorherigen Ansprüche, **dadurch gekennzeichnet, dass** die Sekundäröffnung (9) von der Primäröffnung (8) in Richtung der Längsachse (10) des Gehäuses (2) beabstandet ist.

7. Mobiltelefon nach einem oder mehreren der vorherigen Ansprüche, **dadurch gekennzeichnet, dass** der erste Lautsprecher ein Tieftonlautsprecher ist und/oder
derart im Gehäuse (2) angeordnet ist, dass eine erste Hubachse (20) des ersten Lautsprechers (15), entlang der die erste Membran (19) des ersten Lautsprechers (15) auslenkbar ist, gegenüber der Längsachse (10) des Gehäuses (2), insbesondere um 90°, geneigt ist.

8. Mobiltelefon nach dem vorherigen Anspruch 7, **dadurch gekennzeichnet, dass** in Richtung der Längsachse (10) des Gehäuses (2) eine erste Länge (L1) zwischen der ersten Hubachse (20) und der Primäröffnung (8) kleiner ist als eine zweite Länge (L2) zwischen der erste Hubachse (20) und der Sekundäröffnung (9).

9. Mobiltelefon nach einem der vorherigen Ansprüche 7 bis 8, **dadurch gekennzeichnet, dass** das Audiosystem (4) einen, insbesondere zum ersten Lautsprecher (15) kleineren, zweiten Lautsprecher (21) aufweist,
der ein Hochtonlautsprecher ist und/oder der derart im Gehäuse (2) angeordnet ist, dass eine zweite Hubachse (22) des zweiten Lautsprechers (21), entlang der eine zweite Membran (23) des zweiten Lautsprechers (21) auslenkbar ist, parallel zur Längsachse (10) des Gehäuses (2) verläuft.

10. Mobiltelefon nach dem vorherigen Anspruch 9, **dadurch gekennzeichnet, dass** die beiden ersten Hohlräume (13) der beiden Lautsprecher (15, 21) in einem Endbereich (25) zusammengeführt sind, so dass die beiden Lautsprecher (15, 21) eine gemeinsame Primäröffnung (8) aufweisen.

11. Mobiltelefon nach einem der vorherigen Ansprüche 9 bis 10, **dadurch gekennzeichnet, dass** der erste und zweite Lautsprecher (15, 21) einen gemeinsamen zweiten Hohlraum (14) und/oder eine gemeinsame Sekundäröffnung (9) aufweisen.

12. Mobiltelefon nach einem oder mehreren der vorherigen Ansprüche, **dadurch gekennzeichnet, dass** der erste und zweite Lautsprecher (15, 21) ein, insbesondere piezoelektrischer, MEMS-Lautsprecher mit einem Trägersubstrat (26) ist.

13. Mobiltelefon nach dem vorherigen Anspruch 12, **dadurch gekennzeichnet, dass** der zweite Hohlraum (14) durch einen Substrathohlraum (27) des Trägersubstrats (26) und einen Gehäusehohlraum (28) ausgebildet ist.

14. Verwendung eines Audiosystem (4) in einem Mobiltelefon (1);
wobei das Mobiltelefon (1) ein Gehäuse (2), das eine Rahmenseite (6) aufweist, die eine Vorderseite (5) mit einer gegenüberliegenden Rückseite (7) des Gehäuses (2) verbindet, und einen auf der Vorderseite (5) des Gehäuses (2) angeordneten Berührungsbildschirm (3) umfasst; und
wobei das Audiosystem (4) bei bestimmungsgemäßem Gebrauch in das Gehäuse (2) des Mobiltelefons (1) integriert ist und
einen ersten Hohlraum (13) mit einer benachbart zum Berührungsbildschirm (3) angeordneten Primäröffnung (8), einen zweiten Hohlraum (14) mit einer Sekundäröffnung (9), die auf der Rückseite (7) des Gehäuses (2) angeordnet ist, und einen zwischen den beiden Hohlräumen (13, 14) angeordneten und diese voneinander trennenden ersten Lautsprecher (15) aufweist;
dass mit dem Audiosystem (4) bei bestimmungsgemäßem Gebrauch des Mobiltelefons (1) über die Primäröffnung (8) erste Schallwellen (17) zu einem Ohr eines Benutzers und über die Sekundäröffnung (9) zweite Schallwellen (18) vom Ohr weg in die Umgebung aussendbar sind, die zu den ersten Schallwellen (17) derart phasenversetzt sind, dass die Lautstärke der von dem Audiosystem (4) in die Umgebung abgegebenen Schallwellen reduzierbar ist,
**dadurch gekennzeichnet,**
**dass** das Audiosystem (4) zur Verwendung in dem Mobiltelefon (1) gemäß einem oder mehreren der vorherigen Ansprüche ausgebildet ist, dass die Primäröffnung (8) in der Rahmenseite (6) angeordnet ist und dass der erste Hohlraum (13) im Vergleich zu dem zweiten Hohlraum (14) in Richtung einer Längsachse (10) des Gehäuses (2) kürzer ausgebildet ist, so dass die ersten Schallwellen (17) von einer ersten Membran (19) des ersten Lautsprechers (15) ausgehend bis zur Primäröffnung (8) einen kürzeren Weg zurücklegen als die zweiten Schallwellen (18) von der ersten Membran (19) bis zur Sekundäröffnung (9).

## Claims

1. A mobile phone (1) comprising
a housing (2), having a frame side (6), which connects a front side (5) to an opposite back side (7) of the housing (2),
a touchscreen (3) arranged on a front side (5) of the housing (2), and
an audio system (4) integrated into the housing (2),
which comprises a first cavity (13) comprising a primary opening (8) adjacent to the touchscreen (3),
a second cavity (14) comprising a secondary opening (9) arranged on the back side (7) of the housing (2), and
a first loudspeaker (15) arranged between the two cavities (13, 14) and separating these from one another,
with the aid of which the first sound waves (17) can be emitted to an ear of a user via the primary opening (8) and second sound waves (18) can be emitted away from the ear into the surroundings via the secondary opening (9), which second sound waves are phase-shifted relative to the first sound waves (17) in such a way that the volume of the sound waves emitted into the surroundings by the audio system (4) can be reduced when the mobile telephone (1) is used as intended,,
**characterized in that**
the primary opening (8) is arranged in the frame side (6) and cavity the first cavity (13) is shorter than the second cavity (14) in the direction of a longitudinal axis (10) of the housing (2), so that the first sound waves (17), starting from a first diaphragm (19) of the first loudspeaker (15), travel a shorter distance to the primary opening (8) than the second sound waves (18) from the first diaphragm (19) to the secondary opening (9).

2. The mobile phone as claimed in the preceding claim, **characterized in that** the front side (5) and/or the touchscreen (3) are designed to be planar and/or that the touchscreen (3) extends at least across the entire front side (5), in particular without gaps and/or completely.

3. The mobile phone as claimed in one or more of the preceding claims, **characterized in that** frame side (6) is convexly curved.

4. The mobile phone as claimed in one or more of the preceding claims,
**characterized in that** the primary opening (8) is arranged at the screen edge (12) of the touchscreen.

5. The mobile phone as claimed in one or more of the preceding claims, **characterized in that** the primary opening (8), in a side view of the mobile phone, is arranged at a first level (H1) in the direction of a longitudinal axis (10) of the housing (2) and the secondary opening (9) is arranged at a second level (H2), which is lower than the first level (H1).

6. The mobile phone as claimed in one or more of the preceding claims, **characterized in that** the secondary opening (9) is spaced apart from the primary opening (8) in the direction of the longitudinal axis (10) of the housing (2).

7. The mobile phone as claimed in one or more of the preceding claims,
**characterized in that** the first loudspeaker is a woofer and/or
is arranged in the housing (2) in such a way that a first stroke axis (20) of the first loudspeaker (15), along which a first diaphragm (19) of the first loudspeaker (15) can be deflected, is slanted with respect to the longitudinal axis (10) of the housing (2), in particular by 90°.

8. The mobile phone as claimed in the preceding claim 7, **characterized in that** a first length (L1) between the first stroke axis (20) and the primary opening (8), which extends in the direction of the longitudinal axis (10) of the housing (2), is less than a second length (L2) between the first stroke axis (20) and the secondary opening (9).

9. The mobile phone as claimed in one of the preceding claims 7 to 8,
**characterized in that** the audio system (4) comprises a second loudspeaker (21), which is smaller, in particular, than the first loudspeaker (15),
which is a tweeter and/or is arranged in the housing (2) in such a way that a second stroke axis (22) of the second loudspeaker (21), along which a second diaphragm (23) of the second loudspeaker (21) can be deflected, extends in parallel to the longitudinal axis (10) of the housing (2).

10. The mobile phone as claimed in the preceding claim 9, **characterized in that** the two first cavities (13) of the two loudspeakers (15, 21) are combined in an end region (25), and so the two loudspeakers (15, 21) comprise a common primary opening (8).

11. The mobile phone as claimed in one of the preceding claims 9 to 10,
**characterized in that** the first loudspeaker (15) and the second loudspeaker (21) comprise a common second cavity (14) and/or a common secondary opening (9).

12. The mobile phone as claimed in one or more of the preceding claims,
**characterized in that** the first loudspeaker (15) and the second loudspeaker (21) comprise a, in particular piezoelectric, MEMS loudspeaker comprising a support substrate (26).

13. The mobile phone as claimed in the preceding claim 12, **characterized in that** the second cavity (14) is formed by a substrate cavity (27) of the support substrate (26) and a housing cavity (28).

14. Use of an audio system (4) for a mobile phone (1),
wherein the mobile telephone (1) comprises a housing (2) having a frame side (6) connecting a front side (5) to an opposite rear side (7) of the housing (2) and a touch screen (3) arranged on the front side (5) of the housing (2); and
wherein the audio system (4) is integrated into the housing (2) of the mobile telephone (1) when used as intended, and
comprising a first cavity (13) including a primary opening (8) adjacent to the touchscreen (3),
a second cavity (14) including a secondary opening (9) arranged on the back side (7) of the housing (2) and
a first loudspeaker (15), which is arranged between the two cavities (13, 14) and separates these from one another,
with the aid of the audio system (4) the first sound waves (17) can be emitted to an ear of a user via the primary opening (8) and second sound waves (18) can be emitted away from the ear into the surroundings via the secondary opening (9), which second sound waves are phase-shifted relative to the first sound waves (17) in such a way that the volume of the sound waves emitted into the surroundings by the audio system (4) can be reduced when the mobile telephone (1) is used as intended,
**characterized in that**
the audio system (4) is designed for use in a mobile phone (1) as claimed in one or more of the preceding claims, the primary opening (8) is arranged in the frame side (6) and the first cavity (13) is shorter than the second cavity (14) in the direction of a longitudinal axis (10) of the housing (2), so that the first sound waves (17), starting from a first diaphragm (19) of the first loudspeaker (15), travel a shorter distance to the primary opening (8) than the second sound waves (18) from the first diaphragm (19) to the secondary opening (9).

## Revendications

1. Téléphone portable (1) comprenant un boîtier (2) ayant une face du cadre (6) reliant une face avant (5) à une face arrière opposée (7) du boîtier (2),
un écran tactile (3) disposé sur la face avant (5) du boîtier (2), et
un système audio (4) intégré dans le boîtier (2), comprenant une première cavité (13) ayant une ouverture primaire (8) disposée de manière adjacente à l'écran tactile (3),
une deuxième cavité (14) ayant une ouverture secondaire (9) disposée sur la face arrière (7) du boîtier (2), et
un premier haut-parleur (15) disposé entre les deux cavités (13, 14) et séparant celles-ci l'une de l'autre,
avec lequel, lors de l'utilisation conforme du téléphone portable (1), des premières ondes acoustiques (17) peuvent être émises vers une oreille d'un utilisateur par l'ouverture primaire (8) et des deuxièmes ondes acoustiques (18) peuvent être émises dans l'environnement par l'ouverture secondaire (9) en s'éloignant de l'oreille, lesquelles sont déphasées par rapport aux premières ondes acoustiques (17) de telle sorte que le volume des ondes acoustiques émises par le système audio (4) dans l'environnement puisse être réduit,
**caractérisé en ce que**
l'ouverture primaire (8) est disposée dans la face du cadre (6) et **en ce que** la première cavité (13) est plus courte que la deuxième cavité (14) dans la direction d'un axe longitudinal (10) du boîtier (2), de sorte que les premières ondes acoustiques (17) partent d'un premier diaphragme (19) du premier haut-parleur (15) jusqu'à l'ouverture primaire (8) et parcourent un chemin plus court que les deuxièmes ondes acoustiques (18) du premier diaphragme (19) jusqu'à l'ouverture secondaire (9).

2. Téléphone portable selon la revendication précédente, **caractérisé en ce que** la face avant (5) et/ou l'écran tactile (3) sont plans et/ou en ce que l'écran tactile (3) s'étend au moins sur toute la face avant (5), en particulier sans interruption et/ou complètement.

3. Téléphone portable selon une ou plusieurs des revendications précédentes, **caractérisé en ce que** la face du cadre (6) est incurvée de manière convexe.

4. Téléphone portable selon une ou plusieurs des revendications précédentes, **caractérisé en ce que** l'ouverture primaire (8) est disposée sur la bordure d'écran (12) de l'écran tactile.

5. Téléphone portable selon une ou plusieurs des revendications précédentes, **caractérisé en ce que** l'ouverture primaire (8) est disposée dans une vue latérale du téléphone portable dans la direction de l'axe longitudinal (10) du boîtier (2) à une première hauteur (H1) et l'ouverture secondaire (9) est disposée à une deuxième hauteur (H2) inférieure à la première hauteur (H1).

6. Téléphone portable selon une ou plusieurs des revendications précédentes, **caractérisé en ce que** l'ouverture secondaire (9) est espacée de l'ouverture primaire (8) dans la direction de l'axe longitudinal (10) du boîtier (2).

7. Téléphone portable selon une ou plusieurs des revendications précédentes, **caractérisé en ce que** le premier haut-parleur est un haut-parleur de basses fréquences et/ou
est disposé dans le boîtier (2) de telle sorte qu'un premier axe de levage (20) du premier haut-parleur (15), le long duquel le premier diaphragme (19) du premier haut-parleur (15) est défléchie, est incliné par rapport à l'axe longitudinal (10) du boîtier (2), en particulier de 90°.

8. Téléphone portable selon la revendication précédente 7, **caractérisé en ce que** dans la direction de l'axe longitudinal (10) du boîtier (2), une première longueur (L1) entre le premier axe de levage (20) et l'ouverture primaire (8) est inférieure à une deuxième longueur (L2) entre le premier axe de levage (20) et l'ouverture secondaire (9).

9. Téléphone portable selon l'une des revendications précédentes 7 à 8, **caractérisé en ce que** le système audio (4) comprend un deuxième haut-parleur (21), en particulier plus petit que le premier haut-parleur (15),
qui est un haut-parleur de hautes fréquences et/ou qui est disposé dans le boîtier (2) de telle sorte qu'un deuxième axe de levage (22) du deuxième haut-parleur (21), le long duquel un deuxième diaphragme (23) du deuxième haut-parleur (21) est déflectable, s'étend parallèlement à l'axe longitudinal (10) du boîtier (2).

10. Téléphone portable selon la revendication précédente 9, **caractérisé en ce que** les deux premières cavités (13) des deux haut-parleurs (15, 21) sont réunies dans une zone d'extrémité (25), de sorte que les deux haut-parleurs (15, 21) comportent une ouverture primaire (8) commune.

11. Téléphone portable selon l'une des revendications précédentes 9 à 10, **caractérisé en ce que** les premier et deuxième haut-parleurs (15, 21) comportent une deuxième cavité (14) commune et/ou une ouverture secondaire (9) commune.

12. Téléphone portable selon une ou plusieurs des revendications précédentes, **caractérisé en ce que** les premier et deuxième haut-parleurs (15, 21) sont un haut-parleur MEMS, en particulier piézoélectrique, avec un substrat de support (26).

13. Téléphone portable selon la revendication précédente 12, **caractérisé en ce que** la deuxième cavité (14) est formée par une cavité de substrat (27) du substrat de support (26) et une cavité de boîtier (28).

14. Utilisation d'un système audio (4) dans un téléphone portable (1) ;
le téléphone portable (1) comprenant un boîtier (2) ayant une face du cadre (6) reliant une face avant (5) à une face arrière opposée (7) du boîtier (2), et un écran tactile (3) disposé sur la face avant (5) du boîtier (2) ; et
le système audio (4) étant intégré dans le boîtier (2) du téléphone portable (1) lors de l'utilisation conforme, et
une première cavité (13) ayant une ouverture primaire (8) disposée de manière adjacente à l'écran tactile (3), une deuxième cavité (14) ayant une ouverture secondaire (9) disposée sur la face arrière (7) du boîtier (2), et un premier haut-parleur (15) disposé entre les deux cavités (13, 14) et séparant celles-ci l'une de l'autre ;
avec le système audio (4), lors de l'utilisation conforme du téléphone portable (1), des premières ondes acoustiques (17) peuvent être émises vers une oreille d'un utilisateur par l'ouverture primaire (8) et des deuxièmes ondes acoustiques (18) peuvent être émises dans l'environnement par l'ouverture secondaire (9) en s'éloignant de l'oreille, lesquelles sont déphasées par rapport aux premières ondes acoustiques (17) de telle sorte que le volume des ondes acoustiques émises par le système audio (4) dans l'environnement puisse être réduit,
**caractérisé en ce que**
le système audio (4) est conçu pour être utilisé dans le téléphone portable (1) selon une ou plusieurs des revendications précédentes, l'ouverture primaire (8) est disposée dans la face du cadre (6), et
la première cavité (13) est plus courte que la deuxième cavité (14) dans la direction d'un axe longitudinal (10) du boîtier (2), de sorte que les premières ondes acoustiques (17) partent d'un premier diaphragme (19) du premier haut-parleur (15) jusqu'à l'ouverture primaire (8) et parcourent un chemin plus court que les deuxièmes ondes acoustiques (18) du premier diaphragme (19) jusqu'à l'ouverture secondaire (9).
